# FASCICULE DE BREVET EUROPEEN

(11) **EP 4 111 075 B1**
(45) Date de publication et mention de la délivrance du brevet: **27.12.2023**
(21) Numéro de dépôt: 21704306.6
(22) Date de dépôt: 16.02.2021
(51) Int. Cl.: F16H 3/00, F16H 3/08, F16H 3/089, F16H 3/093

(54) **BOITE DE VITESSES A DOUBLE EMBRAYAGE ET A RAPPORTS COURTS OBTENUS PAR COMBINAISON**
DOPPELKUPPLUNGSGETRIEBE MIT DURCH KOMBINATION ERHALTENEN KURZEN ÜBERSETZUNGSVERHÄLTNISSEN
DUAL CLUTCH GEARBOX WITH SHORT RATIOS OBTAINED BY COMBINATION

(30) Priorité: 27.02.2020 FR 2001958
(43) Date de publication de la demande: 04.01.2023
(73) Titulaire: Renault s.a.s, 92100 Boulogne Billancourt (FR)
(72) Inventeur: BRIEC, Alain, 92500 RUEIL MALMAISON (FR); RAOUL, Michel, 78990 ELANCOURT (FR); TEIXEIRA, Jean-Michel, 91190 Gif-Sur-Yvette (FR)
(86) Numéro de dépôt international: PCT/EP2021/053789
(87) Numéro de publication internationale: WO 2021/170456

(56) Documents cités:
- WO-A1-2011/148065
- DE-A1-102012 019 892

## Description

La présente invention concerne le domaine des boîtes de vitesses pour véhicules automobiles à propulsion thermique ou hybride. Plus particulièrement, l'invention concerne les boîtes de vitesses automatiques à double embrayage.

Elle a pour objet une boîte de vitesses à double embrayage d'entrée, comportant deux arbres primaires concentriques, reliés respectivement au premier embrayage et au deuxième embrayage, des pignons fixes répartis entre les deux arbres primaires, deux arbres secondaires portant des pignons fous engrenant avec les pignons fixes des arbres primaires, et des moyens de couplage des pignons fous sur leur arbre.

La recherche permanente de compacité, de réduction de masse, et de faible coût, peut conduire à proposer des architectures de boîte de vitesses qui réutilisent des couples de pignons existants, pour créer des rapports supplémentaires.

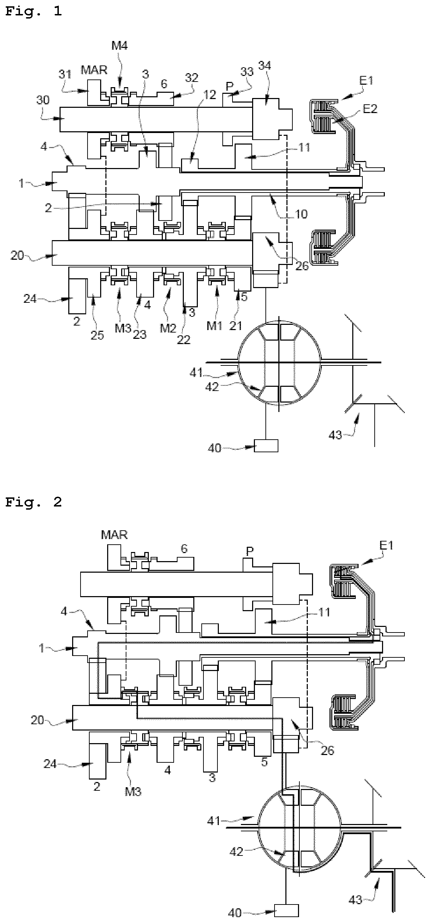

On connaît notamment, de la publication DE 100 15 336, une boîte de vitesses à double embrayage à six rapports de marche avant, obtenus en appliquant ce principe. La boîte possède un arbre primaire plein E2 lié à un embrayage K2, un arbre primaire creux E1 lié à un second embrayage K1, un arbre secondaire 6 et un arbre auxiliaire 7. L'arbre secondaire porte deux groupes de deux pignons fous, qui assurent quatre rapports distincts, de deuxième et de quatrième d'une part, et de troisième et cinquième d'autre part. Ces quatre rapports sont obtenus par l'engrènement d'un pignon fixe agencé sur un des arbres primaires, et d'un pignon fou agencé sur l'arbre secondaire. Cette architecture permet d'obtenir deux rapports supplémentaires, c'est-à-dire un rapport de première et un rapport de sixième. On passe pour cela par une boucle, respectivement de réduction et de multiplication, à l'aide d'engrènements supplémentaires, permettant de coupler les deux arbres primaires grâce à l'arbre auxiliaire. Pour obtenir le rapport de première, on entre par l'arbre creux, que l'on couple à l'arbre plein par l'intermédiaire de l'arbre auxiliaire. Selon la figure 1 de cette publication, l'entrée se fait par le couple de pignons 8a-8b, et la sortie par le couple 9b-9a, le pignon 9b ayant été préalablement lié à l'arbre auxiliaire par le manchon de couplage 10 décalé à gauche. On obtient ainsi une réduction de vitesse, avant de sortir par le rapport de deuxième. La boîte est entraînée par l'embrayage K2 en deuxième, et par l'embrayage K1 en première. L'établissement de la table de vérité montre que l'alternance des rapports pairs et impairs fait toujours appel à l'alternance des embrayages. Par conséquent, tous les passages de marche avant, du rapport N à N+1 ou N-1, sont réalisables sous couple. Mais le premier rapport de marche avant est un rapport ordinaire, inadapté aux fortes Les publications WO2011/148065A1 et DE102012019892A1 divulguent des boîtes de vitesses à double embrayage avec deux rapports supplémentaires.

La présente invention a pour but de réaliser une boîte de vitesses à double embrayage compacte, disposant de rapports spécifiques, pour équiper un véhicule de franchissement, notamment à quatre roues motrices.

Dans ce but, elle propose que le premier rapport de marche avant et le rapport de marche arrière soient établis en combinant l'utilisation du pignon fou de deuxième rapport de marche avant, et le pontage des deux arbres primaires au travers de deux pignons fous de rapports intermédiaires de rangs adjacents tournant autour du même arbre secondaire que le pignon fou de deuxième.

De préférence, le pontage des deux arbres primaires est réalisé en couplant ces deux arbres entre eux sur un rapport fixe.

Selon l'invention, le premier rapport de marche avant est obtenu en sollicitant le moyen de couplage du pignon fou de deuxième sur le premier arbre secondaire, et le moyen de couplage des rapports de troisième et de quatrième.

Selon l'invention, le premier rapport de marche avant, le mouvement passe d'un premier arbre primaire sur l'arbre secondaire entraînant le différentiel, au travers des pignons fous de troisième et de quatrième, d'où il remonte sur le deuxième arbre primaire, avant de redescendre sur le même arbre secondaire par les pignons de deuxième.

Dans un mode de réalisation préféré, le rapport de marche arrière peut être obtenu en sollicitant le moyen de couplage de marche arrière disposé sur un deuxième arbre secondaire, et le moyen de couplage des rapports de troisième et de quatrième.

Le système de pilotage de la boîte peut imposer par défaut le démarrage en marche avant sur son deuxième rapport.

Dans ce cas, l'usage du premier rapport de marche avant n'est autorisé qu'à la demande du conducteur, sous réserve que la vitesse de déplacement du véhicule soit inférieure à un seuil. Le rapport de marche arrière peut quant à lui être obtenu en combinant un moyen de couplage de marche arrière disposé sur un deuxième arbre secondaire, et le pontage des deux arbres primaires au travers de deux pignons fous de rapports intermédiaires de rangs adjacents, tournant autour du même arbre secondaire.

Cette solution permet de réaliser un doubleur de gamme partiel, en obtenant une première et une marche arrière courtes, convenant pour des véhicules de franchissement, grâce à des pignons qui réalisent par eux-mêmes des rapports intermédiaires de la boîte.

La présente invention sera mieux comprise à la lecture de la description suivante d'un mode de réalisation non limitatif de celle-ci, en se reportant aux dessins annexés.
[Fig. 1] 1 est une représentation schématique de la boîte objet de l'invention en coupe longitudinale.
[Fig. 2] montre le cheminement du mouvement pour l'obtention du rapport de deuxième.
[Fig. 3] montre la suite des engrènements pour l'obtention du rapport de première.
[Fig. 4] montre la suite des engrènements du mouvement pour l'obtention de la marche arrière.
[Fig. 5] montre en coupe transversale, les engrènements pour obtention de la marche arrière.
[Fig. 6] montre, en coupe transversale, les engrènements pour obtention du rapport de sixième.

**[Table 1]**

| Références | Nomenclature |
|---|---|
| E1 | Embrayage extérieur arbre plein rapports pairs |
| E2 | Embrayage intérieur arbre creux rapports impairs |
| M1 | Manchon de crabotage des rapports de troisième et de cinquième |
| M2 | Manchon de couplage des pignons fous de troisième et de quatrième |
| M3 | Manchon de crabotage des rapports de deuxième et de quatrième |
| M4 | Manchon de crabotage des rapports de sixième et de marche arrière |
| 1 | Arbre primaire plein des rapports pairs |
| 2 | Pignon fixe de sixième |
| 3 | Pignon fixe de quatrième |
| 4 | Pignon fixe de deuxième |
| 10 | Arbre primaire creux des rapports impairs |
| 11 | Pignon fixe de cinquième |
| 12 | Pignon fixe de troisième |
| 20 | Arbre secondaire bas |
| 21 | Pignon fou de cinquième |
| 22 | Pignon fou de troisième |
| 23 | Pignon fou de quatrième |
| 24 | Pignon fou de deuxième, de première et intermédiaire de marche arrière |
| 25 | Pignon menant de marche arrière |
| 26 | Pignon d'attaque arbre secondaire bas de la couronne de différentiel |
| 30 | Arbre secondaire haut |
| 31 | Pignon fou de marche arrière |
| 32 | Pignon fou de sixième |
| 33 | Roue de frein de parking |
| 34 | Pignon d'attaque arbre secondaire haut de la couronne de différentiel |
| 40 | Couronne de pont |
| 41 | Boitier de différentiel |
| 42 | Mécanisme de différentiel avant |
| 43 | Renvoi conique vers train arrière |

La boîte de vitesses illustrée par les figures, est une boîte de vitesses à double embrayage E1, E2, et à doubleur de gamme partiel. Elle comporte deux arbres primaires concentriques, reliés respectivement au premier embrayage E1 et au deuxième embrayage E2, des pignons fixes 2, 3, 4, 11, 12, répartis entre les deux arbres primaires 1, 10, deux arbres secondaires 20, 30, portant des pignons fous 21, 22, 23, 24, 31, 32 engrenant avec les pignons fixes des arbres primaires et des moyens de couplage des pignons fous sur leur arbre. Le premier arbre secondaire, porte les pignons fous de deuxième, troisième, quatrième, et cinquième rapport de marche avant. Le deuxième arbre secondaire 30, porte les pignons fous de marche arrière 31 et de sixième rapport de marche avant 32.

Le premier arbre secondaire 20, dit bas, porte les quatre pignons fous 21, 22, 23, 24, engrenant avec les pignons fixes des arbres primaires. Le second arbre secondaire 30, dit haut, porte deux pignons fous 31, 32 engrenant respectivement avec un pignon fixe 2, de l'arbre primaire 1, et avec un des pignons fous 25, portés par l'arbre secondaire bas 20.

La boîte possède cinq rapports de base : la deuxième, la quatrième et la sixième, agencées sur l'arbre plein 1, et la troisième et la cinquième sur l'arbre primaire creux 10. Le rapport de deuxième est obtenu par l'engrènement des pignons fixe 4 et fou 24 ; le rapport de quatrième est obtenu par l'engrènement des pignons fixe 3 et fou 23 ; le rapport de sixième est obtenu par l'engrènement des pignons fixe 2 et fou 32 ; le rapport de troisième est obtenu par l'engrènement des pignons fixe 12 et fou 22 ; enfin, le rapport de cinquième est obtenu par l'engrènement des pignons fixe 11 et fou 21. Chaque pignon fou peut être lié en rotation à l'un ou l'autre des arbres secondaires 20, 30 par des groupes de synchronisation et de crabotage : M1 pour les rapports de troisième et de cinquième, M3 pour les rapports de deuxième et de quatrième de M4 pour les rapports de sixième et de marche arrière. Ces cinq rapports ont des chemins de transmission de couple directs.

Les rapports de première et de marche arrière suivent des chemins de transmission de couple indirects, en empruntant une dérivation réalisée lors du couplage de deux pignons fous entre lesquels est intercalé un dispositif de synchronisation et de crabotage M2.

Les rapports de première et de marche arrière sont obtenus, par combinaison, en faisant intervenir les pignons fous de troisième 22 et de quatrième 23. En déplaçant le manchon de couplage de troisième-quatrième (M2) vers la gauche, ces deux pignons sont reliés. Les deux arbres primaires 1, 10 sont alors liés selon un rapport fixe différent de un. Selon le sens dans lequel le mouvement traverse le coupleur M2, sa vitesse est augmentée, ou réduite dans un rapport inverse.

Sur la figure 2, le chemin de transmission du mouvement de la boîte en situation de deuxième engagée, est indiqué en trait gras. L'embrayage E1 et le dispositif de couplage M3 sont sollicités. L'embrayage E1 entraine l'arbre primaire plein 1 et son pignon fixe de deuxième 4. Le couple est transmis au pignon fou 24 correspondant. Le manchon du groupe de crabotage M3, est déplacé vers la gauche. Le pignon fou de deuxième 24 est solidaire de l'arbre secondaire 20. Le couple est ensuite transmis par le pignon 26 à la couronne de pont 40, fixée sur le boîtier de différentiel 41. Il est réparti à ce niveau entre le mécanisme de différentiel 42 entraînant les roues avant du véhicule, et le renvoi de mouvement 43 vers les roues du train arrière du véhicule.

Le premier rapport de marche avant et le rapport de marche arrière, sont établis en combinant l'utilisation du pignon fou 24 de deuxième rapport de marche avant, et le pontage des deux arbres primaires 1, 10 au travers de deux pignons fous de rapports intermédiaires de rangs adjacents 22, 23, tournant autour du même arbre secondaire 20 que le pignon fou de deuxième 24.

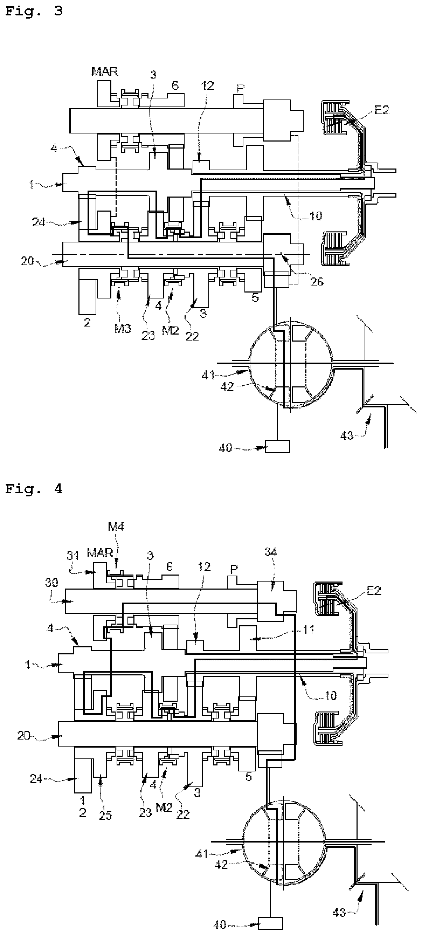

Sur la figure 3, le chemin de transmission du mouvement en première, est indiqué en trait gras. L'embrayage E2 et les dispositifs de couplage M2 et M3 sont sollicités. L'embrayage E2 entraîne l'arbre primaire creux 10 et son pignon fixe de troisième 12. Le couple est transmis au pignon fou de troisième. Le manchon du dispositif de couplage M2, est déplacé vers la gauche. On réalise ainsi un pontage des deux arbres primaires, en les couplant entre eux sur un rapport fixe. Le premier rapport de marche avant est obtenu en sollicitant le moyen de couplage du pignon fou de deuxième sur le premier arbre secondaire, et le moyen de couplage des rapports de troisième et de quatrième, également sur le premier arbre secondaire.

Le pignon fou de quatrième 23, est solidaire du pignon fou de troisième 22. Il entraîne l'arbre primaire plein 1, dont l'embrayage E1 est ouvert. Le pignon fixe 4 porté par l'arbre primaire 1, entraîne le pignon fou de deuxième 24. Le manchon du groupe de crabotage M3 est déplacé vers la gauche. Le pignon fou de deuxième 24 est solidaire de l'arbre secondaire 20. De ce dernier, le couple est transmis par le pignon 26 à la couronne de pont 40, fixée sur le boîtier de différentiel 41. De là, il est réparti entre le mécanisme de différentiel 42 entraînant les roues avant et du véhicule, et le renvoi de mouvement 43 en direction des roues arrière du véhicule. Dans cet enchaînement, la dérivation du mouvement par les pignons fous de troisième 22 et de quatrième 23 aboutit à donner au différentiel le sens de rotation d'un rapport de marche avant. Sur ce rapport, le mouvement passe d'un premier arbre primaire sur l'arbre secondaire entraînant le différentiel, au travers des pignons fous de troisième et de quatrième, d'où il remonte sur le deuxième arbre primaire, avant de redescendre sur le même arbre secondaire par le couple de pignons de deuxième. En résumé, le premier rapport de marche avant est obtenu en combinant le couplage du pignon fou 24 de deuxième rapport de marche avant sur un premier arbre secondaire 20, et le pontage des deux arbres primaires 1, 10 au travers des pignons fous de deux rapports intermédiaires de rangs adjacents 22, 23.

En désignant par R3 le rapport de réduction en troisième, par R4 le rapport de réduction en quatrième, par R2 le rapport de réduction en deuxième, et enfin par Rp le rapport de réduction du pont, le ratio obtenu par la dérivation de la figure 2 (en passant par le pignon fou de troisième et de quatrième dans cet ordre) est (R3/R4) × R2 × Rp. Le ratio de deuxième étant R2 × Rp, l'écart entre le rapport de deuxième et le rapport dérivé de la figure 2 correspond à l'écart entre les rapports de troisième et de quatrième (R3/R4). Le rapport dérivé est donc un rapport de première, plus court que la deuxième.

Pour obtenir un ratio de première très court, et une V₁₀₀₀ (vitesse de déplacement du véhicule à 1000 tours par minute), demandée pour un véhicule de franchissement, le saut entre la troisième et la quatrième est choisi de préférence supérieur à 1,6. En partant d'un ratio total de deuxième lui-même court, par exemple supérieur à 15, le ratio de première est supérieur à 25. Pratiquement, pour obtenir un tel ratio de deuxième, son pignon fixe doit être disposé sur l'arbre primaire plein pour avoir une taille suffisamment réduite, car ce serait impossible sur l'arbre primaire creux.

Sur la figure 4, la boîte de vitesses est en situation de marche arrière engagée, le rapport de marche arrière est obtenu en sollicitant un moyen de couplage de marche arrière disposé sur un deuxième arbre secondaire. Le chemin de transmission est indiqué en trait gras. Le mouvement passe d'un premier arbre primaire sur l'arbre secondaire entraînant le différentiel, au travers des pignons fous de troisième et de quatrième, d'où il remonte sur le deuxième arbre primaire, avant de passer sur le deuxième arbre secondaire par les pignons de marche arrière. Comme sur la figure 3, l'embrayage E2 et les dispositifs de couplage M2 et M4 sont sollicités. L'embrayage E2 entraîne l'arbre primaire creux 10, et son pignon fixe de troisième 12. Le couple est transmis au pignon fou 22 correspondant. Le manchon du dispositif de couplage M2 est déplacé vers la gauche. Le pignon fou de quatrième 23, solidaire du pignon fou de troisième 22, est à son tour entraîné. Il entraîne lui-même l'arbre primaire plein 1, dont l'embrayage E1 est ouvert. Le pignon fixe 4 porté par l'arbre primaire 1 entraîne le pignon fou de deuxième 24 et le pignon menant de marche arrière 25, solidaire de celui-ci. Ce dernier engrène avec le pignon fou de marche arrière 31, porté par l'arbre secondaire haut 30. Le manchon du groupe de crabotage M4, est déplacé vers la gauche. Le pignon fou de marche arrière 31, est solidaire de l'arbre secondaire 30. Par le pignon 34, le couple passe de ce dernier à la couronne de pont 40, fixée sur le boîtier de différentiel 41, où il se répartit entre le mécanisme de différentiel 42 entraînant les roues avant et du véhicule et le renvoi de mouvement 43 vers les roues du train arrière du véhicule. La dérivation du mouvement par les pignons fous de troisième 22, de quatrième 23 puis de deuxième 24, et enfin par l'engrenage de pignons 25,31, met le différentiel en rotation dans le sens d'un rapport de marche arrière.

En résumé, le rapport de marche arrière est établi en combinant l'engagement d'un pignon fou de marche arrière 31 sur le deuxième arbre secondaire 30, le couplage de ce dernier sur un des arbres primaires 1 par l'intermédiaire d'un couple de pignons de marche arrière 25, 31, et le pontage des arbres primaires 1, 10 au travers des deux pignons fous de rapports intermédiaires de rangs adjacents 22, 23. Comme pour le premier rapport de marche avant, le pontage des deux arbres primaires est réalisé en reliant directement les deux pignons fous de rapports intermédiaires adjacents. Dans les deux cas, les deux pignons fous de rangs intermédiaires adjacents sont reliés en déplaçant de l'un vers l'autre un manchon de couplage disposé entre ces deux pignons.

En désignant par R3 le rapport de réduction en troisième, par R4 le rapport de réduction en quatrième, par R2 le rapport de réduction en deuxième, par Rar le rapport de réduction entre les pignons de marche arrière 25 et 31, et enfin par Rp le rapport de réduction du pont, le ratio Rr obtenu par cette dérivation est : Rr = (R3/R4) × R2 × Rar × Rp. Le ratio Rar permet d'ajuster le ratio global de marche arrière à un niveau proche de celui de la première. On peut remarquer que l'engrènement direct entre les pignons fous de deuxième 24 et de marche arrière 31, permettrait aussi d'obtenir un sens de rotation correspondant à un rapport de marche arrière, mais pas sur un ratio satisfaisant.

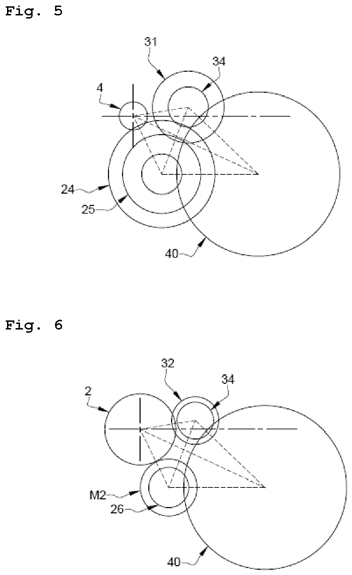

Les figures 5 et 6 sont les coupes transversales schématiques de la boîte de vitesses proposée. La figure 5 met en évidence les engrènements intervenant pour l'obtenir le rapport de marche arrière, sauf la dérivation par l'engrenage des pignons de troisième et de quatrième. Les trois engrènements représentés sont d'abord celui des pignons de deuxième 4, 24, puis celui des deux arbres secondaires 25, 31, qui ajuste le ratio de marche arrière et assure l'inversion du sens de rotation. Le dernier est celui de la transmission de couple entre l'arbre secondaire haut 30 et le différentiel 41 par l'engrènement 34, 40. La figure 6 montre les engrènements permettant d'établir le rapport de sixième. Les deux engrènements représentés sont celui des pignons 2 et 32, du rapport de sixième, et celui de la transmission de couple entre l'arbre secondaire haut 30 et le différentiel 41 par l'engrenage des pignons 34, 40. Ce schéma met en évidence la contrainte de construction imposée par la proximité du pignon fixe 2 avec le manchon de crabotage M2, de pontage des pignons fous de troisième et de quatrième.

Comme les rapports de cinquième, quatrième, troisième et deuxième, le rapport de sixième est obtenu par des engrenages de pignons spécifiques et indépendants. Pour réaliser l'étagement des rapports souhaité, la contrainte de saut entre la première et la deuxième est d'avoir une valeur minimum de 1,6. Ce saut se reporte sur le saut entre la troisième et la quatrième, puisque ces deux sauts sont égaux. Un saut aussi important est inacceptable, du point de vue de l'agrément de conduite, entre la cinquième et la sixième. De plus, l'ensemble de l'étagement serait dans ce cas en progression géométrique. L'ouverture atteindrait au moins 1,6 à la puissance cinq (1.6⁵), soit une valeur inadaptée. En choisissant un pontage entre les pignons de troisième et de quatrième, la contrainte de l'étagement en progression géométrique s'arrête à la quatrième. Les couples de pignons indépendants, permettent de construire un étagement des rapports supérieurs, répondant aux exigences de l'agrément de conduite. L'ouverture entre les rapports de deuxième et de sixième peut ainsi être contenue dans une plage acceptable, soit entre 5,5 et 6.

Dans un mode de fonctionnement privilégié (mais non impératif), de cette boîte de vitesses, les départs arrêtés, ou « *décollages* » du véhicule, s'effectuent par défaut sur le rapport de deuxième. L'usage du premier rapport de marche avant peut cependant être autorisé à la demande du conducteur. Celui-ci dispose avantageusement d'une interface dédiée, par exemple de type bouton de commande. L'usage de la première est ainsi soumis à la volonté du conducteur, sous réserve de l'accord du système de pilotage de la boîte, lorsque la vitesse de déplacement du véhicule est inférieure à un seuil. Le rapport de réduction du premier rapport de marche avant et celui de la marche arrière, sont destinés en particulier à des conditions de franchissement. La comparaison des figures 1 et 2 met en évidence que le passage de la deuxième vers la première, après enclenchement du pontage entre les deux arbres, est une simple bascule entre les embrayages. L'engagement de la première peut ainsi parfaitement être réalisé en cours de roulage.

Enfin, on peut obtenir un septième rapport, en rapportant un pignon fou et un dispositif de couplage supplémentaires sur l'arbre secondaire haut. La boîte dispose ainsi d'un rapport supplémentaire, obtenu à partir du pignon fixe 11 de cinquième. Ce septième rapport est ajouté sans impacter l'encombrement longitudinal de la boîte de vitesses.

## Revendications

1. Boîte de vitesses à double embrayage d'entrée, comportant deux arbres primaires concentriques (1, 10), reliés respectivement au premier embrayage (E1) et au deuxième embrayage (E2), des pignons fixes (2, 3, 4, 11, 12) répartis entre les deux arbres primaires, deux arbres secondaires (20, 30) portant des pignons fous (21, 22, 23, 24, 31, 32) engrenant avec les pignons fixes des arbres primaires et des moyens de couplage (M1, M2, M3, M4) des pignons fous, où le premier rapport de marche avant et le rapport de marche arrière sont établis en combinant l'utilisation du pignon fou (24) de deuxième rapport de marche avant, **caractérisé en ce que** le pontage des deux arbres primaires (1, 10) au travers de deux pignons fous de rapports intermédiaires de rangs adjacents (22, 23) tournant autour du même arbre secondaire (20) que le pignon fou de deuxième (24), le premier rapport de marche avant est obtenu en sollicitant le moyen de couplage du pignon fou de deuxième (M3) sur le premier arbre secondaire (20), et le moyen de couplage des rapports de troisième et de quatrième (M2), et **en ce que**, sur le premier rapport de marche avant, le mouvement passe d'un premier arbre primaire (10) sur l'arbre secondaire (20) entraînant le différentiel, au travers des pignons fous de troisième et de quatrième (22, 23), d'où il remonte sur le deuxième arbre primaire (1), avant de redescendre sur le même arbre secondaire (20) par les pignons de deuxième (4, 24).

2. Boîte de vitesses à double embrayage d'entrée selon la revendication 1, **caractérisée en ce que** le premier rapport de marche avant est obtenu en combinant le couplage du pignon fou (24) de deuxième rapport de marche avant sur un premier arbre secondaire (20), et le pontage des deux arbres primaires (1, 10) au travers des pignons fous de deux rapports intermédiaires de rangs adjacents (22, 23).

3. Boîte de vitesses à double embrayage d'entrée selon la revendication 2, **caractérisé en ce que** le rapport de marche arrière est établi en combinant l'engagement d'un pignon fou de marche arrière (31) sur un deuxième arbre secondaire (30), le couplage de ce dernier sur un des arbres primaires (1) par l'intermédiaire d'un couple de pignons de marche arrière (25, 31), et le pontage des arbres primaires (1, 10) au travers des deux pignons fous de rapports intermédiaires de rangs adjacents (22,23).

4. Boîte de vitesses à double embrayage d'entrée selon la revendication 1 2 ou 3, **caractérisée en ce que** le pontage des deux arbres primaires (1, 10) est réalisé en couplant ces deux arbres entre eux sur un rapport fixe différent de un.

5. Boîte de vitesses à double embrayage d'entrée selon l'une des revendications précédentes, **caractérisée en ce que** le pontage des deux arbres primaires (1, 10) est réalisé en reliant directement les deux pignons fous de rapports intermédiaires adjacents (22, 23).

6. Boîte de vitesses à double embrayage d'entrée selon la revendication 5, **caractérisée en ce que** les deux pignons fous de rangs intermédiaires adjacents (22, 23) sont reliés en déplaçant de l'un vers l'autre un manchon de couplage (M2) disposé entre ces deux pignons.

7. Boîte de vitesses à double embrayage d'entrée selon l'une des revendications précédentes, **caractérisé en ce que** les deux rapports intermédiaires sont le troisième et le quatrième rapport de marche avant.

8. Boîte de vitesses à double embrayage d'entrée selon l'une des revendications précédentes, **caractérisée en ce que** le rapport de marche arrière est obtenu en sollicitant le moyen de couplage de marche arrière (M4) disposé sur un deuxième arbre secondaire (30), et le moyen de couplage des rapports de troisième et de quatrième (M2).

9. Boîte de vitesses à double embrayage d'entrée selon l'une des revendications précédentes, **caractérisée en ce que**, sur le rapport de marche arrière, le mouvement passe, au travers des pignons fous de troisième et de quatrième (22, 23), d'un premier arbre primaire (10) au second arbre primaire (1) qui entraîne le pignon fou de marche arrière (31) par intermédiaire des pignons fous de deuxième (4, 24) et du couple de pignons de marche arrière (25, 31).

10. Boîte de vitesses à double embrayage d'entrée selon l'une des revendications précédentes, **caractérisée en ce que** son premier arbre secondaire (20) porte des pignons fous de deuxième (24), troisième (22), quatrième (23), et cinquième (21) rapports de marche avant, et son deuxième arbre secondaire (30), porte les pignons fous de marche arrière (31) et de sixième rapport de marche avant (32).

11. Boîte de vitesses à double embrayage d'entrée selon la revendication 10, **caractérisée en ce qu'**elle dispose d'un rapport supplémentaire obtenu à partir du pignon fixe (11) de cinquième, en rapportant un pignon fou et un dispositif de couplage supplémentaires sur le deuxième arbre secondaire (30).

12. Procédé de fonctionnement d'une boîte de vitesses à double embrayage d'entrée selon l'une des revendications précédentes, **caractérisé en ce que** son système de pilotage impose par défaut le démarrage en marche avant sur son deuxième rapport.

13. Procédé de fonctionnement selon la revendication 12, **caractérisé en ce que** l'usage du premier rapport de marche avant est autorisé à la demande du conducteur, sous réserve que la vitesse de déplacement du véhicule soit inférieure à un seuil.

14. Procédé de fonctionnement selon la revendication 12 ou 13, **caractérisé en ce que** le rapport de réduction du premier rapport de marche avant et du rapport de marche arrière, sont destinés à des conditions de franchissement.

## Patentansprüche

1. Getriebe mit eingangsseitiger Doppelkupplung, das zwei konzentrische Antriebswellen (1, 10), die jeweils mit der ersten Kupplung (E1) und mit der zweiten Kupplung (E2) verbunden sind, Festräder (2, 3, 4, 11, 12), die auf die zwei Antriebswellen verteilt sind, zwei Abtriebswellen (20, 30), die Losräder (21, 22, 23, 24, 31, 32) tragen, die mit den Festrädern der Antriebswellen in Eingriff stehen, und Kopplungsmittel (M1, M2, M3, M4) für die Losräder umfasst, wobei der erste Vorwärtsgang und der Rückwärtsgang durch das Kombinieren der Verwendung des Losrades (24) des zweiten Vorwärtsganges hergestellt werden, **dadurch gekennzeichnet, dass** die Bildung einer Brücke zwischen den zwei Antriebswellen (1, 10) mittels zweier Zwischengang-Losräder benachbarter Ränge (22, 23), die sich um die gleiche Abtriebswelle (20) wie das Losrad des zweiten Ganges (24) drehen, der erste Vorwärtsgang dadurch erhalten wird, dass das Kopplungsmittel des Losrades des zweiten Ganges (M3) auf der ersten Abtriebswelle (20) und das Kopplungsmittel des dritten und vierten Ganges (M2) belastet werden, und dass, in dem ersten Vorwärtsgang, die Bewegung mittels der Losräder des dritten und vierten Ganges (22, 23) von einer ersten Antriebswelle (10) zu der Abtriebswelle (20), die das Differential antreibt, verläuft, von wo aus sie zu der zweiten Antriebswelle (1) zurückgeht, bevor sie durch die Räder des zweiten Ganges (4, 24) wieder zu der gleichen Abtriebswelle (20) zurückkehrt.

2. Getriebe mit eingangsseitiger Doppelkupplung nach Anspruch 1, **dadurch gekennzeichnet, dass** der erste Vorwärtsgang durch das Kombinieren der Kopplung des Losrades (24) des zweiten Vorwärtsganges auf einer ersten Abtriebswelle (20) und der Bildung einer Brücke zwischen den zwei Antriebswellen (1, 10) mittels der Losräder von zwei Zwischengängen benachbarter Gänge (22, 23) erhalten wird.

3. Getriebe mit eingangsseitiger Doppelkupplung nach Anspruch 2, **dadurch gekennzeichnet, dass** der Rückwärtsgang durch das Kombinieren des Eingriffs eines Losrades des Rückwärtsganges (31) auf einer zweiten Abtriebswelle (30), der Kopplung letzterer mit einer der Antriebswellen (1) mit Hilfe eines Paares von Rückwärtsgangrädern (25, 31) und der Bildung einer Brücke zwischen den Antriebswellen (1, 10) mittels der zwei Zwischengang-Losräder benachbarter Ränge (22, 23) hergestellt wird.

4. Getriebe mit eingangsseitiger Doppelkupplung nach Anspruch 1, 2 oder 3, **dadurch gekennzeichnet, dass** die Bildung einer Brücke zwischen den zwei Antriebswellen (1, 10) dadurch erfolgt, dass diese zwei Wellen untereinander mit einem festen Verhältnis, das sich von eins unterscheidet, gekoppelt werden.

5. Getriebe mit eingangsseitiger Doppelkupplung nach einem der vorhergehenden Ansprüche, **dadurch gekennzeichnet, dass** die Bildung einer Brücke zwischen den zwei Antriebswellen (1, 10) dadurch erfolgt, dass die zwei benachbarten Zwischengang-Losräder (22, 23) direkt verbunden werden.

6. Getriebe mit eingangsseitiger Doppelkupplung nach Anspruch 5, **dadurch gekennzeichnet, dass** die zwei benachbarten Zwischenrang-Losräder (22, 23) dadurch verbunden werden, dass eine Kopplungsmuffe (M2), die zwischen diesen zwei Rädern angeordnet ist, von dem einem zu dem anderen verschoben wird.

7. Getriebe mit eingangsseitiger Doppelkupplung nach einem der vorhergehenden Ansprüche, **dadurch gekennzeichnet, dass** die zwei Zwischengänge der dritte und der vierte Vorwärtsgang sind.

8. Getriebe mit eingangsseitiger Doppelkupplung nach einem der vorhergehenden Ansprüche, **dadurch gekennzeichnet, dass** der Rückwärtsgang dadurch erhalten wird, dass das Rückwärtsgang-Kopplungsmittel (M4), das auf einer zweiten Abtriebswelle (30) angeordnet ist, und das Kopplungsmittel des dritten und vierten Ganges (M2) belastet werden.

9. Getriebe mit eingangsseitiger Doppelkupplung nach einem der vorhergehenden Ansprüche, **dadurch gekennzeichnet, dass** im Rückwärtsgang die Bewegung mittels der Losräder des dritten und vierten Ganges (22, 23) von einer ersten Antriebswelle (10) zu der zweiten Antriebswelle (1) verläuft, die das Rückwärtsgang-Losrad (31) mit Hilfe der Losräder des zweiten Ganges (4, 24) und des Paares von Rückwärtsgangrädern (25, 31) antreibt.

10. Getriebe mit eingangsseitiger Doppelkupplung nach einem der vorhergehenden Ansprüche, **dadurch gekennzeichnet, dass** seine erste Abtriebswelle (20) Losräder des zweiten (24), dritten (22), vierten (23) und fünften (21) Vorwärtsganges trägt und seine zweite Abtriebswelle (30) die Losräder des Rückwärtsganges (31) und des sechsten Vorwärtsganges (32) trägt.

11. Getriebe mit eingangsseitiger Doppelkupplung nach Anspruch 10, **dadurch gekennzeichnet, dass** es über einen zusätzlichen Gang verfügt, der anhand des Festrades (11) des fünften Ganges dadurch erhalten wird, dass ein zusätzliches Losrad und eine zusätzliche Kopplungsvorrichtung auf der zweiten Abtriebswelle (30) angebracht werden.

12. Verfahren für den Betrieb eines Getriebes mit eingangsseitiger Doppelkupplung nach einem der vorhergehenden Ansprüche, **dadurch gekennzeichnet, dass** sein Steuerungssystem standardmäßig das Anfahren im zweiten Vorwärtsgang vorgibt.

13. Betriebsverfahren nach Anspruch 12, **dadurch gekennzeichnet, dass** die Verwendung des ersten Vorwärtsganges auf Wunsch des Fahrers gestattet wird, sofern die Fortbewegungsgeschwindigkeit des Fahrzeugs unter einem Schwellenwert liegt.

14. Betriebsverfahren nach Anspruch 12 oder 13, **dadurch gekennzeichnet, dass** das Übersetzungsverhältnis des ersten Vorwärtsganges und des Rückwärtsganges für Bedingungen im Gelände gedacht ist.

## Claims

1. Gearbox with a dual input clutch, comprising two concentric primary shafts (1, 10) respectively connected to the first clutch (E1) and to the second clutch (E2), fixed pinions (2, 3, 4, 11, 12) distributed between the two primary shafts, two secondary shafts (20, 30) bearing idling pinions (21, 22, 23, 24, 31, 32) engaging with the fixed pinions of the primary shafts, and means (M1, M2, M3, M4) for coupling the idling pinions, wherein the first forward-gear ratio and the reverse-gear ratio are established by combining the use of the second forward-gear-ratio idling pinion (24), **characterized in that** the lock-up of the two primary shafts (1, 10) via two intermediate-gear-ratio idling pinions (22, 23) of adjacent rows rotating about the same secondary shaft (20) as the second-gear idling pinion (24), the first forward-gear ratio is obtained by acting on the means (M3) for coupling the second-gear idling pinion to the first secondary shaft (20), and on the means (M2) for coupling the third-gear and fourth-gear ratios, and **in that**, in the first forward-gear ratio, the movement passes from a first primary shaft (10) to the secondary shaft (20) driving the differential, via the third-gear and fourth-gear idling pinions (22, 23), from where it rises to the second primary shaft (1) before descending again to the same secondary shaft (20) via the second-gear pinions (4, 24).

2. Gearbox with a dual input clutch according to Claim 1, **characterized in that** the first forward-gear ratio is obtained by combining the coupling of the second forward-gear-ratio idling pinion (24) with a first secondary shaft (20) and the lock-up of the two primary shafts (1, 10) via the idling pinions (22, 23) of two intermediate gear ratios of adjacent rows.

3. Gearbox with a dual input clutch according to Claim 2, **characterized in that** the reverse-gear ratio is established by combining the engagement of a reverse-gear idling pinion (31) on a second secondary shaft (30), the coupling of the latter with one of the primary shafts (1) by way of a pair of reverse-gear pinions (25, 31), and the lock-up of the primary shafts (1, 10) via the two intermediate-gear-ratio idling pinions (22, 23) of adjacent rows.

4. Gearbox with a dual input clutch according to Claim 1, 2 or 3, **characterized in that** the lock-up of the two primary shafts (1, 10) is produced by coupling these two shafts to one another in a fixed gear ratio different from one.

5. Gearbox with a dual input clutch according to one of the preceding claims, **characterized in that** the lock-up of the two primary shafts (1, 10) is produced by directly connecting the two adjacent intermediate-gear-ratio idling pinions (22, 23).

6. Gearbox with a dual input clutch according to Claim 5, **characterized in that** the two idling pinions (22, 23) of adjacent intermediate rows are connected by moving, one toward the other, a coupling sleeve (M2) arranged between these two pinions.

7. Gearbox with a dual input clutch according to one of the preceding claims, **characterized in that** the two intermediate gear ratios are the third and fourth forward-gear ratios.

8. Gearbox with a dual input clutch according to one of the preceding claims, **characterized in that** the reverse-gear ratio is obtained by acting on the reverse-gear coupling means (M4) arranged on a second secondary shaft (30), and on the means (M2) for coupling the third-gear and fourth-gear ratios.

9. Gearbox with a dual input clutch according to one of the preceding claims, **characterized in that**, in the reverse-gear ratio, the movement passes, via the third-gear and fourth-gear idling pinions (22, 23), from a first primary shaft (10) to the second primary shaft (1) which drives the reverse-gear idling pinion (31) by way of the second-gear idling pinions (4, 24) and the pair of reverse-gear pinions (25, 31).

10. Gearbox with a dual input clutch according to one of the preceding claims, **characterized in that** its first secondary shaft (20) bears second (24), third (22), fourth (23) and fifth (21) forward-gear-ratio idling pinions, and its second secondary shaft (30) bears the reverse-gear idling pinions (31) and the sixth forward-gear-ratio idling pinion (32).

11. Gearbox with a dual input clutch according to Claim 10, **characterized in that** it has an additional gear ratio obtained from the fixed fifth-gear pinion (11) by adding an additional idling pinion and an additional coupling device to the second secondary shaft (30).

12. Method for operating a gearbox with a dual input clutch according to one of the preceding claims, **characterized in that** the control system thereof imposes, by default, forward-gear starting in its second gear ratio.

13. Operating method according to Claim 12, **characterized in that** the use of the first forward-gear ratio is allowed at the request of the driver, provided that the speed of movement of the vehicle is below a threshold.

14. Operating method according to Claim 12 or 13, **characterized in that** the reduction ratio of the first forward-gear ratio and of the reverse-gear ratio are intended for crossover conditions.
